Europäisches Patentamt

European Patent Office

Office européen des brevets

(11) Publication number: **0 177 941**
A2

(12) # EUROPEAN PATENT APPLICATION

(21) Application number: **85112765.4**

(22) Date of filing: **08.10.85**

(51) Int. Cl.⁴: **G 03 G 19/00**, G 11 B 5/845,
G 11 B 5/852, G 11 B 5/706

(30) Priority: **11.10.84 US 659899**

(43) Date of publication of application: **16.04.86**
**Bulletin 86/16**

(84) Designated Contracting States: **BE DE FR GB**

(71) Applicant: **E.I. DU PONT DE NEMOURS AND COMPANY,
1007 Market Street, Wilmington Delaware 19898 (US)**

(72) Inventor: **Marcus, Sanford Morton, 4638 Weldin Road,
Wilmington Delaware 19803 (US)**

(74) Representative: **Werner, Hans-Karsten, Dr. et al,
Deichmannhaus am Hauptbahnhof, D-5000 Köln 1 (DE)**

(54) **Dropout-free magnetic printing plate.**

(57) A magnetic printing master prepared by:
1. coating a layer on a flexible support sheet;
2. prestructuring the coating in a periodic manner, and
3. laminating the CrO₂-coated sheet onto a second adhesive-coated, support sheet, such as 3–7 mil polyester.
   The resulting film may be imaged by selective demagnetization and toned. Known transfer technology may then be used to provide a printing plate.

TITLE

DROPOUT-FREE MAGNETIC PRINTING PLATE

FIELD OF THE INVENTION

This invention relates to prestructured magnetic layers on flexible substrates, and more particularly to tonable premagnetized, thermally selective demagnetizable magnetic layers useful in the production of printing plates.

STATE OF THE ART

Typically a traditional graphic arts printing plate such as a lithographic printing plate comprises a presensitized photosensitive ink receptive layer coated on an aluminum substrate. This plate is imagewise exposed through a silver halide mask containing an image which often includes a multitude of transparent or opaque dots to provide a latent image on the plate. After exposure, the aluminum plate is processed, i.e., the unexposed areas are washed off, leaving behind an image composed of a pattern of ink-receptive dots on a nonink-receptive aluminum surface. Printing is accomplished by applying ink to the dots on the plate and subsequently transferring the inked pattern onto a sheet of paper or other substrate. When multicolored images are involved, the usual approach is to produce a number of primary single color images of the original, and then, through individual printing plates, superpose the multiple images to produce one that reproduces the original colors.

Lithography is expected to remain the primary printing process for a number of years due to the high quality of the final result. However, the above process of producing lithographic plates is expensive, in that it uses silver halide films for the exposure masks, and is labor intensive. More recently, digital printing through computer generated patterns is becoming desirable as a cost-reducing method.

It has been recognized that magnetography, a process wherein a magnetic image capable of attracting toner particles, may be employed to produce a high quality printing plate. Thus, an image comprising a dot pattern may be created on a magnetizable layer, toned, and then either printed directly or by transferring the toner onto the surface of a properly treated aluminum sheet. The product is a lithographic plate. To produce the magnetic image, the magnetizable layer may be a prestructured magnetic layer, as described below, which is imagewise demagnetized by selective heating above its Curie point. This can be done either through exposure, using a mask and an energy source, or by scanning with a modulated laser beam, controlled by a computer, to generate digitally produced images. Or one may use a combination of the two techniques. This allows one to add information onto a magnetic master, or to alter information in selective portions of the plate at a later time.

However, it is difficult enough to produce a commercially acceptable magnetizable layer on a substrate. It is more difficult when the combination must be capable of retaining and transferring onto a second substrate a high quality toned halftone image of lithographic printing quality. Lithographic printing plates reproduce 150 lines/inch [6 line/μm] and 2% to 98% dots. They additionally provide adequate dimensional stability to assure registration when multiple color images are produced. To be commercially useful, they must have widths of 50 inches, and comparable lengths.

To obtain adequate dimensional stability, the magnetic layer must be coated onto a sheet of polyester about 0.003 inches or more thick. To obtain the needed image resolution, the magnetic layer must be prestructured by imposing thereon a line magnetic pattern having a spatial frequency of the order of 500 to 1500 cycles/inch. Such patterns are very difficult to produce on large webs at commercially acceptable production rates. Problems appear in the form of dropouts, that is, areas of no magnetic pattern. Dropouts usually appear adjacent to minute bumps in the coating. These may be due to minor aggregations of particles or dust specks which break the intimate contact between the magnetic surface and the premagnetizing instrument, as described in more detail below.

## SUMMARY OF THE INVENTION

The object of this invention is to provide a prestructured magnetized layer on a dimensionally stable substrate: (a) capable of thermal imagewise selective demagnetization, (b) able to reproduce toned halftone images of 150 lines/inch resolution and 2%-98% dots with adequate dimensional stability for graphic arts applications to (c) create printing plates having widths of 50 inches [125 cm] or more. This object is obtained by providing a magnetic printing master comprising a prestructured magnetic layer on a support sheet, prepared by (1) first coating a magnetic layer of 1-3 microns thickness upon a first flexible support sheet having a thickness of between 0.00037 inches and 0.0006 inches, [15 to 24 microns] (2) then prestructuring the coated magnetic layer by imposing thereon a magnetic line pattern having a spatial frequency of 500 to 1500 cycles per inch, and (3) subsequently laminating the prestructured layer and first support sheet onto a second support sheet having a thickness between 0.003 inches and 0.007 inches. The result is a composite structure having a magnetically prestructured surface on a dimensionally stable supporting base.

Stated another way, the invention is directed to a magnetic master produced by positioning a thin (1-3 μm) highly calendered $CrO_2$ film on a thin base (0.00037 inches to 0.001 inches or 9.4 micrometer to 25.4 micrometers) which has been magnetically structured in a periodic manner, which film is then laminated to an adhesive-coated thick, dimensionally stable base (e.g., 3 to 7 mil polyester). The advantage of coating $CrO_2$ onto such a thin substrate is that the known coating technology of video magnetic tape manufacture can be used to obtain relatively dropout-free magnetic film. Further, high quality dropout-free magnetic structuring can be readily obtained using wide magnetic head technology. By laminating this magnetically structured film to a thick, dimensionally stable base one can obtain the handling and stability requirements needed for use in the graphic arts and still have a dropout-free magnetic layer.

In a preferred embodiment, the thickness of the first flexible supporting sheet is 0.0005 inches (12.7 micrometers), and the magnetic layer comprises acicular $CrO_2$ particles dispersed in a suitable binder.

### BRIEF DESCRIPTION OF THE DRAWINGS

The invention may be more fully understood from the following detailed description taken in connection with the accompanying drawings which form a part of the disclosure and in which

Fig. 1 is a schematic cross-section of a magnetic printing master produced in accordance with the present invention.

Fig. 2 is a flow sheet of a sequence of operations necessary to produce the magnetic printing master.

Fig. 3 is a schematic representation showing a typical prestructuring arrangement.

Fig. 4 is an enlarged representation of a portion of Fig. 3 showing a magnetic head in contact with a magnetic surface during the prestructuring process.

Fig. 5 is an enlarged representation of a portion of Fig. 3 showing in greater detail the effect of a surface irregularity during prestructuring, when a dimensionally stable support is used.

Fig. 6 is an enlarged representation of a portion of Fig. 3 showing the effect of a surface irregularity during prestructuring when a thin flexible support is used.

Fig. 7 illustrates the laminating step employed in this process.

### Detailed Description of the Invention

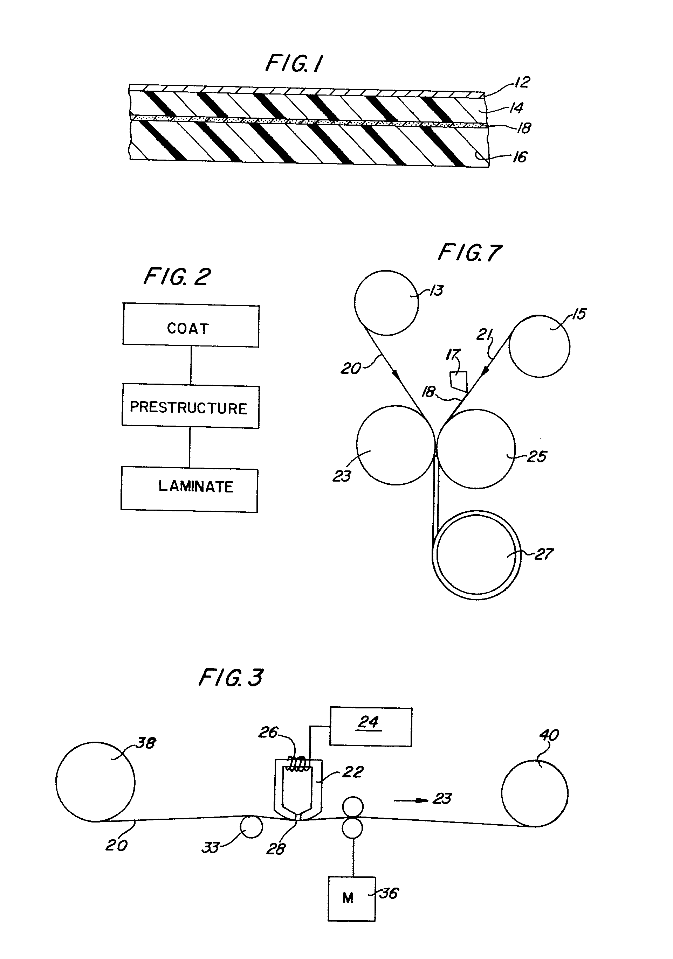

Throughout the following detailed description, similar reference characters refer to similar elements in all figures. With reference to Fig. 1, a magnetic master 10 produced in accordance with the present invention comprises a magnetic layer 12, a support sheet 14, an adhesive layer 18, and a second support 16. In the preferred embodiment layer 12 comprises fine, preferably acicular, particulate, single domain, hard magnetic matter dispersed in a polymeric binder of low or poor heat conductivity, polyurethane.

Desirably, the particulate material should be (1) capable of magnetization to a hard, magnetic state, and (2) have a particle size of 1 micrometer or under, since in recording and copying techniques the resolution is limited by the particle size. Accordingly, the smaller and more uniform the particle size the better. Preferably, these particles should have a maximum dimension in the range of 0.3 to 1 micrometers. The particulate nature of the magnetic material also serves to limit the spread of the heat image by thermal diffusion, particularly when the particles are bound together and to the support with a binder of relatively low thermal conductivity.

The hard magnetizable material must be capable of magnetization such that it exhibits an energy product $(BH)_{max}$ of .08-8.0 x $10^6$ gauss oersteds, a remanence B of 500 to 5,000 or more gauss, coercivity $H_c$ of 40 to 6,000 oersteds and Curie point temperature below 1200°C, preferably in the range of 25° to 500°C. Desirably, the magnetizable material should also have as high a saturation magnetization, i.e., flux, as is consistent with the just recited desirable property range.

A particularly outstanding species of the magnetic component genus which can be used in making the recording member for use in the present invention is chromium dioxide ($CrO_2$). The term chromium dioxide, as used in this disclosure, includes the pure form and the modified forms. Suitable descriptions of both the process of preparation and the compositions which have the necessary properties will be found in the following illustrative list of issued US patents: 2,956,955; 3,117,093; 3,074,778;

3,078,147;   3,278,263;   2,923,683;   2,923,684,
3,034,988; 3,068,176, and 2,923,685.

For pure $CrO_2$ the Curie temperature is near 119°C. This varies somewhat depending on the modifiers used in the synthesis of $CrO_2$, but Curie temperatures in the range of 95°C to 155°C are easily obtainable with modified $CrO_2$.

Chromium dioxide has a relatively low Curie temperature, and in the desired particulate form has a relatively high coercivity and a relatively high remanence. Finely particulate chromium dioxide further absorbs light uniformly throughout the region of the visible spectrum, i.e., it is black to the exposing light.

Other magnetic materials which can be employed include iron carbide and $\gamma Fe_2O_3$. The magnetic layer 12 is coated, preferably using gravure coating technology, to a thickness of about 3 micrometers onto first flexible support sheet 14, preferably a polyethylene terephthalate sheet having a thickness between 0.00037 inches (0.00939 mm) and 0.0006 inches (0.0152 mm). In a preferred embodiment the first flexible support sheet 14 is 0.0005 inches (0.0127 mm) thick. Polyethylene, cellulose acetate, or polyvinyl chloride may also be used for the first flexible support sheet.

The magnetic layer 12 is then prestructured by the imposition of a magnetic pattern thereon in a manner to be described below. It is then laminated to second support sheet 16, preferably using an adhesive 18 to improve adhesion. Second support sheet 16 is preferably also a polyethylene terephthalate sheet, with a thickness between 0.003 inches (0.0762 mm) and 0.007 inches (0.178 mm). Such thickness range has been found to provide adequate dimensional stability for the production of lithographic printing plates having 2% to 98% dot resolution capabilities when used for the reproduction of multiple color images. In the preferred embodiment an adhesive layer comprising a mixture of Ameripol 1513, a copolymer of butadiene and styrene in a 60/40 proportion (39% wt.), Ameripol CB220, a polybutadiene, (60%), both manufactured by B. F. Goodrich, and an antioxidant such as a substituted phenol made by Ciba-Geigy under the tradename Irganox 1010 (0.5%) is employed during the laminating process, and the second support sheet comprises a 0.004 inch (0.10 mm) polyethylene terephthalate sheet.

Figure 2 is a flow sheet of the process steps required to produce a magnetic master of the type described above, beginning with coating the magnetic layer 12 onto first support sheet 14, followed by the prestructuring operation. The latter imposes a magnetic pattern on the magnetic layer 12. When prestructuring is completed, support sheet 14 is laminated onto second support sheet 16 to produce a dimensionally stable magnetic master.

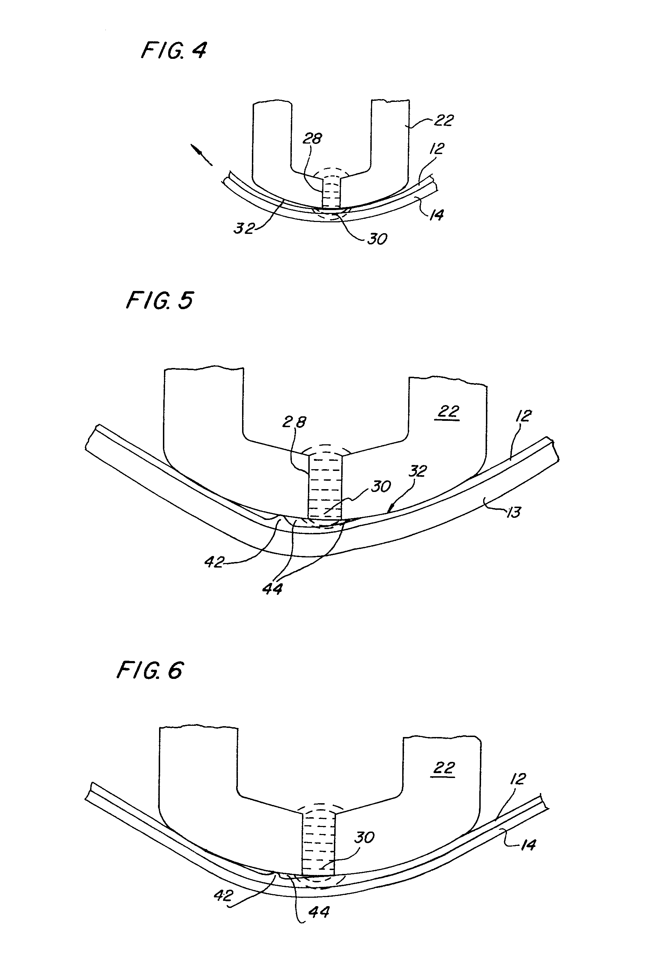

Fig. 3 depicts in simplified schematic form an arrangement for prestructuring a magnetic master for eventual imaging. Supply spool 38 provides a web 20 composed of magnetic layer 12 coated on first support sheet 14; this is moved by suitable drive means past a magnetic recording head 22.

A source of alternating electric energy, such as oscillator 24, excites a coil 26 in the magnetic recording head to produce an alternating magnetic field in the body of the magnetic recording head 22. The latter, generally composed of a high permeability metal, provides a path through which the magnetic field preferentially travels. The long end of the magnetic recording head 22 terminates in a gap 28 which is filled with a material having low magnetic permeability. This gap interrupts the path of the magnetic field, and a magnetic field 30 extends outwardly from the head in the vicinity of the gap, as shown in greater detail in Fig. 4.

Magnetic recording head 22 extends transversely the full width of web 20. Gap 28 is coextensive with the head and oriented perpendicularly to the web movement. The bottom surface 32 of the magnetic recording head 22 is curved and lapped to present a very smooth surface, over which web 20 is guided in intimate contact through a system of guide roller 33 and drive rollers 34. The orientation of the web is such that the surface of the magnetic layer 12 is in contact with bottom surface 32 of the recording head. A drive motor 36 drives the web at a uniform speed, and it is collected on a web takeup spool 40

As the magnetic layer is driven past the recording head gap, it is subjected to the influence of the alternating magnetic field in the vicinity of the gap. This field is uniform in the direction across the web, that is along the gap, but since it varies with time, as the web is moved under the magnetic recording head, it produces a series of magnetized sections extending transversely across the web and having alternate magnetic poles. These sections may be represented by a series of imaginary parallel lines corresponding to the areas of maximum field intensity due to the alternating magnetic field imposed by the recording head. The separation of the lines is a function of the frequency of the alternating field in the recording head and the speed of transition of the web past the recording head. This is called prestructuring of the magnetic layer.

A magnetic latent image is produced by the selective demagnetization of the prestructured magnetic layer 12, usually using thermal energy to locally increase the magnetic layer temperature to above its Curie point. Other methods which produce selective demagnetization may be used, such as a second magnetic head to locally erase the magnetic field in imagewise fashion. The image is then made visible by applying a magnetically attractable toner onto the surface of the magnetic layer. Toner particles such as $Fe_3O_4$ and $\gamma Fe_2O_3$ adhere to the areas of maximum field strength, i.e., the prestructured pattern of lines, and not to nonmagnetized sections. It is, therefore, obvious that image quality is highly dependent on the density of the prestructuring pattern, i.e., the number of magnetic lines per unit length, and also on the integrity or continuity of the individual lines. It is thus essential that intimate contact be maintained between the bottom surface 32 of the recording head and the surface of layer 12 in the vicinity of gap 28 so that magnetic layer 12 remains well within alternating magnetic field 30.

It has now been discovered that higher quality magnetic images with fewer dropouts are obtained when the web carrying the magnetizable layer is very thin and flexible. The reason for this is not clearly understood, but appears to be somewhat linked to the flexibility or pliability of the supporting layer. One possible explanation of why superior prestructured layers are obtained when thin supporting webs are used may be that because of its flexibility the web conforms better to the coating roll during the coating process. This results in a coated web having fewer mechanical defects to begin with, such as fewer specks of $CrO_2$ agglomerates. A second reason is described below with the aid of Figs. 5 and 6.

Fig. 5 depicts what is believed to happen when a speck of dust or coating defect 42 on the surface of the web traverses the recording head. As the defect 42 runs along the bottom surface 32 of the recording head 22, it lifts and separates the web from contact with the bottom surface 32 creating a void 44. The stiffer the support sheet 20, the bigger the void 44. As a result of this separation, the magnetic layer 12 is no longer, or only partially, subjected to the alternating magnetic field; as a result, it is either not magnetized, that is prestructured, at all, or magnetized inadequately in the vicinity of the defect. In either case, there results an area in the surface which is not toner receptive. Such areas are known as dropouts and their presence or, preferably, absence, determines whether a magnetic master is adequate for lithographic printing plate preparation.

Fig. 6 depicts the same situation as shown in Fig. 5, however, in this instance the magnetic layer 12 is coated onto a first support sheet 14 which is about 0.0005 (12.7/$\mu$m) inches thick. Because such a thin support exhibits great pliability, web 20 this time stretches locally, draping itself around the agglomerate or dust speck, and maintaining good contact with the lower surface of the head. Hence its flow over the recording head is hardly interrupted. Thus the thinner support results in better contact between the recording head and the magnetic medium, minimizing dropouts.

**0 177 941**

Fig. 7 shows the final step in the preparation of the magnetic master. Because web 20 comprising first support sheet 14 and magnetic coating 12 has inadequate dimensional stability for use as a magnetic master. It is now brought into contact with a second web 21. The latter is composed (See Fig. 1) of second support sheet 16 on which by passage through an application station 17 there has been coated an adhesive composition 18. The two webs 20 and 21 are brought in intimate contact preferably under heat and pressure between a pair of laminating rollers 23 and 25 and the laminated web is taken up on spool 27. Supply spools for webs 20 and 21 are also shown as spools 13 and 15 respectively.

This invention has been explained in detail hereinabove with occasional reference to the making of a magnetic master useful in producing a lithographic printing plate by eventual transfer of the toned image onto an aluminum plate surface. This use is merely illustrative of a preferred application where high resolution, coupled with good dimensional stability, is required of a magnetic master. Other graphic arts uses are contemplated, such as color proofing applications. In this case the magnetic master toned image may be used to transfer the image directly onto the final receiving surface such as paper or transparency rather than serving as an intermediate surface to produce a lithographic printing plate. Similarly, transfer may be accomplished through xeroprinting by transferring and fusing an electrically insulating toned image onto a conductive substrate such as steel or other metal and then employing an electrostatic toning and transfer process to deposit a second toner, in this case an electrostatic toner, onto a final receiving surface.

Or the toned image could be fused in place on the magnetic master to form yet another kind of visible image.

CLAIMS:

1. A magnetic printing master in the form of a composite structure having a magnetically prestructured surface on a dimensionally stable support prepared by (1) coating a magnetic layer of 1-3 microns thickness onto a first flexible support sheet having a thickness of between 0.00037 inches and 0.0006 inches, (2) prestructuring the coated magnetic layer by imposing thereon a magnetic line pattern having a spatial frequency of 500 to 1500 cycles per inch, and (3) subsequently laminating the prestructured layer and first support sheet onto a second support sheet having a thickness between 0.003 inches and 0.007 inches.

2. The magnetic printing master of claim 1 wherein the thickness of the first flexible support sheet is 0.0005 inches, and the magnetic layer comprises acicular $CrO_2$ particles dispersed in a suitable binder.

3. The magnetic printing master of claim 1 wherein the second support sheet is adhesive-coated 3-7 mil polyester.

4. The magnetic printing master of claim 1, imaged by selective demagnetization and toned.

FIG. I

FIG. 2

COAT

PRESTRUCTURE

LAMINATE

FIG. 7

FIG. 3

*FIG. 4*

*FIG. 5*

*FIG. 6*